# EUROPEAN PATENT SPECIFICATION

(11) **EP 0 197 793 B1**
(45) Date of publication and mention of the grant of the patent: **18.11.1993**
(21) Application number: 86302597.9
(22) Date of filing: 08.04.1986
(51) Int. Cl.: C08K 5/15, C08L 23/02

(54) **Stabilizing polyolefins**
Stabilisierung von Polyolefinen
Stabilisation de polyoléfines

(30) Priority: 09.04.1985 JP 76272/85
(43) Date of publication of application: 15.10.1986
(73) Proprietor: SUMITOMO CHEMICAL COMPANY, LIMITED, Chuo-ku Osaka 541 (JP)
(72) Inventor: Ishii, Tamaki, Suita Osaka-fu (JP); Yachigo, Shinichi, Toyonaka Osaka-fu (JP); Sasaki, Manji, Ibaraki Osaka-fu (JP); Okamura, Haruki, Joto-ku Osaka-fu (JP); Shionoya, Masahisa, Izumi Osaka-fu (JP)
(74) Representative: Geering, Keith Edwin

(56) References cited:
- EP-A- 0 155 847
- JP-A-59 025 826

## Description

The present invention relates to improving the stability of polyolefin resins and in particular their resistance to yellowing by nitrogen oxide gases (hereinafter referred to as NOₓ).

Polyolefin resins have excellent physical, chemical and electrical properties, so that they are formed into molded products, pipes, sheets, films, etc. by various methods such as blow molding, extrusion molding, injection molding, calendering, etc. and used in many fields. It is well known that, when polyolefin resins such as polyethylene, polypropylene, etc. are used alone, they deteriorate under the action of heat, oxygen and light on processing or use, thereby showing a remarkable reduction in physical properties accompanied by phenomena such as softening, embrittlement, etc. For the purposes of preventing such phenomena, methods are so far known in which various kinds of antioxidants and light stabilizers are added alone or in combination during the production or processing of polyolefin resins; such antioxidants include phenolic type, sulfur-containing and phosphite type antioxidants, etc., and light stabilizers include bensophenone type, benzotriazole type, cyano-acrylate type, nickel type and hindered piperidine type light stabilizers, etc. Recently it has been appreciated that the appearance of polyolefin resins is markedly damaged by yellowing caused by NOₓ in waste gases (e.g. combustion gases from automobiles outdoors and from oilstoves indoors); the previously mentioned antioxidants and stabilizers are not sufficiently effective against such yellowing.

We have found that resistance to the yellowing can be improved by incorporating a particular phenolic type compound in polyolefin resins.

The present invention improves the resistance of polyolefin resin to yellowing by nitrogen oxide gases by blending 3,9-bis[2(3-(3-tert-butyl-4-hydroxy-5-methylphenyl)propionyloxy)-1,1-dimethylethyl]-2,4,8,10-tetraoxaspiro[5.5]undecane with the resin in an amount by weight of at least 0.001 parts per 100 parts of the resin. The latter additive can be used effectively together with antioxidants and light stabilizers (including thioether type and phosphite type antioxidants) generally added to prevent deterioration by heat, light, etc. and discoloration by heat.

The phenolic type compound used in the present invention is well known and described in Japanese Patent Kokai (Laid-open) No.25,826/1984. This Patent Kokai Publication relates to stabilized synthetic resin compositions; it describes adding an ester compound having a group represented by the general formula 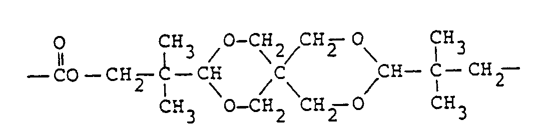
in the molecule to synthetic resins, and gives a wide range of phenolic type compounds, but it gives no suggestion of any effect of the compounds against NOₓ yellowing in polyolefin resins.

We have studied a wide range of phenolic type compounds described in said Patent Kokai Publication and found unexpectedly that, of the phenolic type compounds represented by the general formula (I), 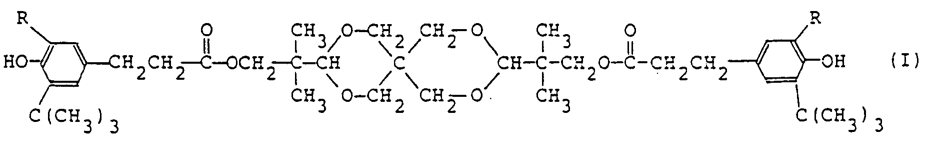
those where substituent R is a hydrogen atom or an ethyl, propyl, butyl group etc. exhibit little effect against NOₓ yellowing, and that only that where R is a methyl group exhibits a specifically excellent effect against NOₓ yellowing.

The phenolic compound employed according to the invention can also impart thermal stability to the polyolefin resin.

In the present invention, when the amount of the specified phenolic type compound added to polyolefins is too small, sufficient thermal stability is not obtained, while when said amount is too large, a correspondingly enhanced effect is difficult to obtain, this being disadvantageous economically. In order to attain improvement in the thermal stability and resistance to NOₓ yellowing at the same time, said amount is at least 0.001 (preferably at least 0.01) part by weight, with a suitable maximum being e.g. 5 parts (preferably 1 part) by weight, all based on 100 parts by weight of polyolefin resin.

The method of blending the specified phenolic type compound and polyolefin resin is not particularly critical, and the well-known apparatus and procedures generally employed to incorporate stabilizers, pigments, fillers, etc. in polyolefin resins can be used with little or no modification.

Polyolefin resins suitable for the present invention include poly α-olefins such as low-density polyethylene, medium- to high-density polyethylene, linear low-density polyethylene, polypropylene, polybutene-1, etc.; poly α-olefin copolymers such as propylene/ethylene random or block copolymers, ethylene/butene-1 random copolymers, etc.; copolymers of poly α-olefin with vinyl monomer such as maleic acid anhydride-modified polypropylene, etc.; and mixtures thereof. Further blends of polyolefin(s) with rubber(s) such as isoprene rubber (IR), butyl rubber (IIR), nitrile rubber (NBR), styrene/butadiene copolymeric rubber (SBR), ethylene/propylene rubber (EPM, EPDM), etc. are also included in the scope of the polyolefin resins used in the present invention. Particularly, the specified phenolic type compound is effective for polypropylene.

The present invention is illustrated in detail by the following Examples, but it is not limited to these Examples.

### EXAMPLE 1

100 parts by weight of unstabilized polypropylene resin, 0.1 part by weight of calcium stearate and predetermined amounts, as described in Table 2, of various test compounds were mixed for 5 minutes on a mixer, and melt-kneaded on a mixing roll at 180°C to obtain a blend. Each blend was formed into a sheet 1 mm thick on a hot press kept at 210°C, and test pieces of 100 x 40 x 1 mm and 40 x 40 x 1 mm in size were prepared from every sheet.

According to "Testing Method for Color Fastness to Nitrogen Oxides" (JIS L 0855), test pieces of 100 x 40 x 1 mm were exposed to an atmosphere having an NOₓ concentration of 2%, and the NOₓ yellowing resistances of the test pieces were evaluated based on the degree of coloration after 24 hours exposure, graded in nine steps as follows :-
- 1: yellowish brown
- 1.5: yellowish brown to yellow
- 2: yellow
- 2.5: yellow to pale yellow
- 3: pale yellow
- 3.5: pale yellow to very pale yellow
- 4: very pale yellow
- 4.5: very pale yellow to colorless
- 5: colorless
Test pieces of 40 x 40 x 1 mm were each placed in a Geer oven kept at 160°C, and the period required for 30% of the test piece area to become brittle was taken as the thermal embrittlement induction period and used for evaluation of the thermal and oxidation stability. The results are shown in Table 2.

Of the test compounds described in Table 2, compounds I-I and A0-1 to A0-4 are those shown in Table 1, and compounds A0-5 to A0-9 and LS-1 are as shown following Table 1.

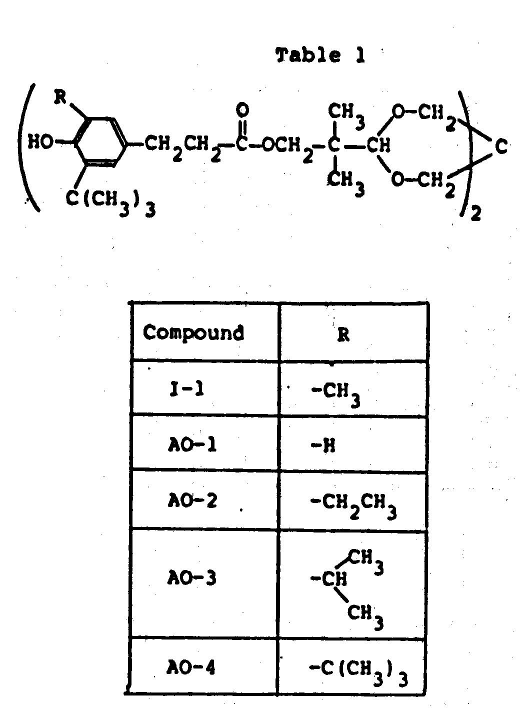

- AO-5: Pentoerythritol tetrakis{3-(3,5-di-tert-butyl-4-hydroxyphenyl)-propionate}
- AO-6: n-Octadecyl 3-(3,5-di-tert-butyl-4-hydroxyphenyl)propionate
- AO-7: 1,3,5-Tris(4-tert-butyl-3-hydroxy-2,6-dimethylbenzyl)-isocyanuric acid
- AO-8: Distearyl thiodipropionate
- AO-9: Tris(2,4-di-tert-butylphenyl)phosphite
- LS-1: Bis(2,2,6,6-tetramethyl-4-piperidyl) sebacate

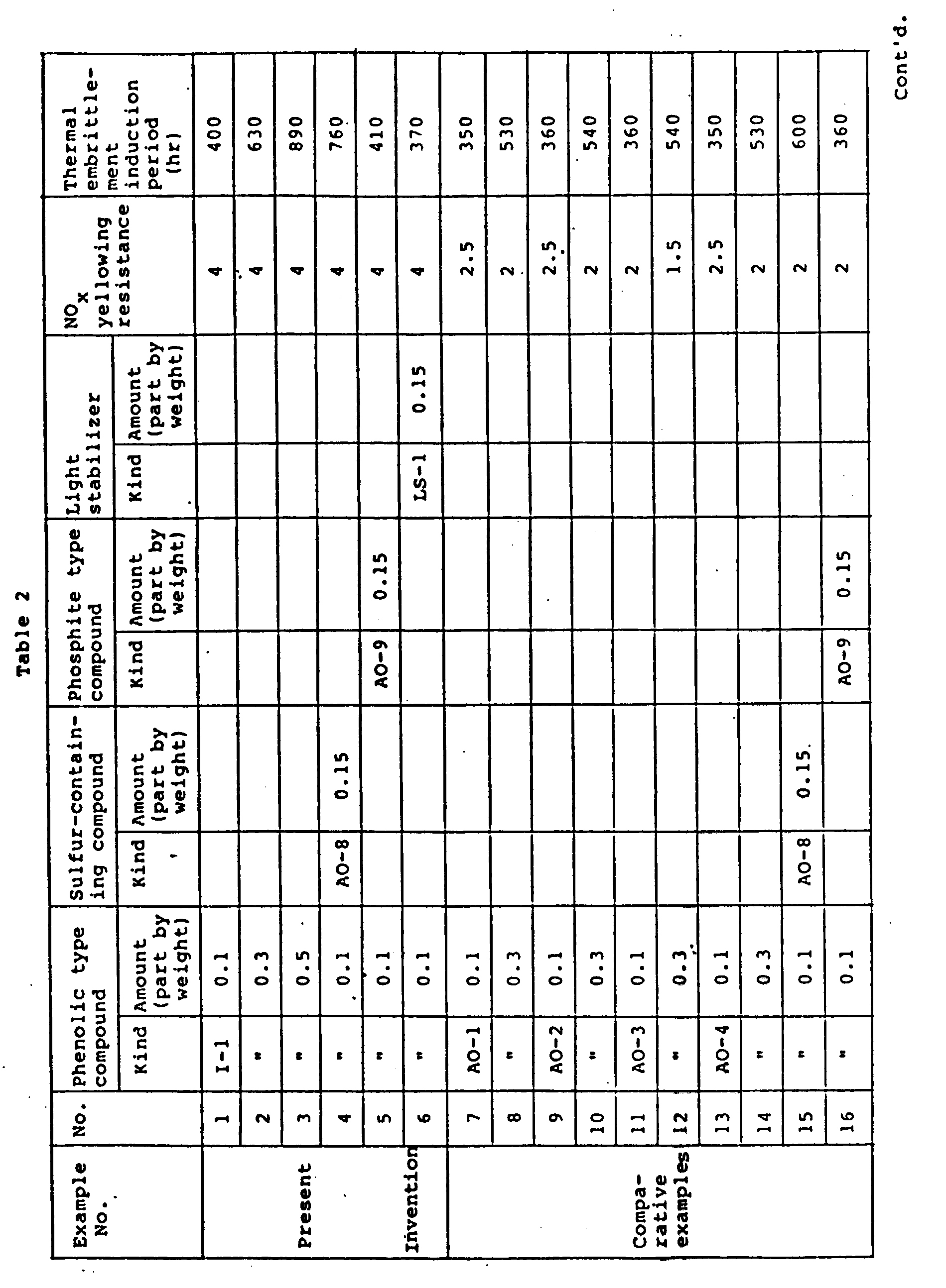

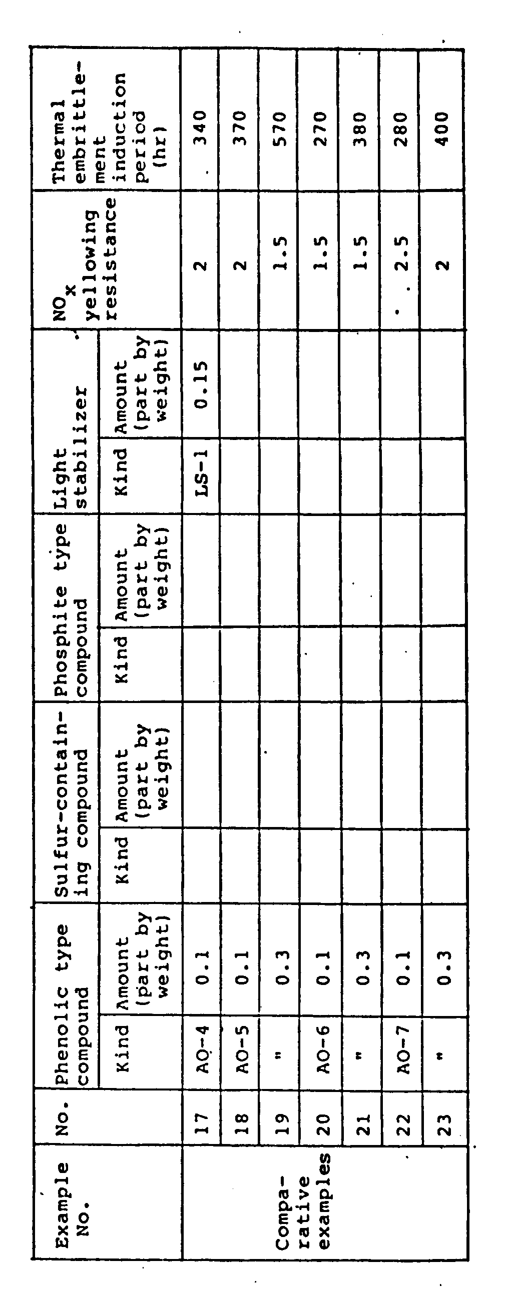

## Claims

1. Use of at least 0.001 parts by weight of 3,9-bis[2-(3-(3-tert-butyl-4-hydroxy-5-methylphenyl)propionyloxy)-1,1-dimethylethy]-2,4,8,10-tetraoxaspiro[5.5]undecane in a blend with 100 parts by weight of polyolefin resin to improve the resistance of the resin to yellowing by nitrogen oxide gases.

2. Use according to claim 1 wherein 3,9-bis[2-(3-(3-tert-butyl-4-hydroxy-5-methylphenyl)propionyloxy)-1,1-dimethylethyl]-2, 4,8,10-tetraoxaspiro[5.5]undecane is blended in an amount of 0.001 to 5 parts by weight based on 100 parts by weight of the polyolefin resin.

3. Use according to claim 2 wherein 3,9-bis[2-(3-(3-tert-butyl-4-hydroxy-5-methylphenyl)propionyloxy)-1,1-dimethylethyl]-2, 4,8,10-tetraoxaspiro[5.5]undecane is blended in an amount of at least 0.01 parts by weight based on 100 parts by weight of the polyolefin resin.

4. Use according to claim 2 or 3 wherein 3,9-bis[2-(3-(3-tert-butyl-4-hydroxy-5-methylphenyl)propionyloxy)-1,1-dimethylethyl]-2,4,8,10-tetraoxaspiro[5.5]undecane is blended in an amount of at most 1 part by weight based on 100 parts by weight of the polyolefin resin.

5. Use according to any preceeding claim wherein the polyolefin resin is polypropylene.

## Patentansprüche

1. Verwendung von mindestens 0,001 Gew.-Teilen von 3,9-Bis[2-(3-(3-tert-butyl-4-hydroxy-5-methylphenyl)-propionyloxy)-1,1-dimethylethyl]-2,4,8,10-tetraoxaspiro [5,5]undecan in einer Mischung mit 100 Gew.-Teilen eines Polyolefin-Harzes zur Verbesserung der Harzbeständigkeit gegen Vergilben durch Stickstoffoxidgase.

2. Verwendung nach Anspruch 1, worin 3,9-Bis[2-(3-(3-tert-butyl-4-hydroxy-5-methylphenyl)propionyloxy)-1,1-dimethylethyl]-2,4,8,10-tetraoxaspiro[5,5]undecan in einer Menge von 0,001 bis 5 Gew.-Teilen, basierend auf 103 Gew.-Teilen des Polyolefin-Harzes, vermischt wird.

3. Verwendung nach Anspruch 2, worin 3,9-Bis[2-(3-tert-butyl-4-hydroxy-5-methylphenyl)propionyloxy)-1,1-dimethylethyl]-2,4,8,10-tetraoxaspiro[5,5]undecan in einer Menge von mindestens 0,01 Gew.-Teilen, basierend auf 100 Gew.-Teilen des Polyolefin-Harzes, vermischt wird.

4. Verwendung nach Anspruch 2 oder 3, worin 3,9-Bis[2-(3-(3-tert-butyl-4-hydroxy-5-methylphenyl)propionyloxy)-1,1-dimethylethyl]-2,4,8,10-tetraoxaspiro[5,5]undecan in einer Menge von mindestens 1 Gew.-Teil, basierend auf 100 Gew.-Teilen des Polyolefin-Harzes, vermischt wird.

5. Verwendung nach einem der vorhergehenden Ansprüche, worin das Polyolefin-Harz Polypropylen ist.

## Revendications

1. Utilisation d'au moins 0,001 partie en poids de 3,9-bis[2-(3-(3-tertio-butyl-4-hydroxy-5-méthylphényl)propionyloxy)-1,1-diméthyléthyl]-2,4,8,10-tétraoxaspiro[5.5]undécane dans un mélange avec 100 parties en poids d'une résine polyoléfinique pour améliorer la résistance de la résine au jaunissement provoqué par les oxydes d'azote gazeux.

2. Utilisation suivant la revendication 1, dans laquelle du 3,9-bis[2-(3-(3-tertio-butyl-4-hydroxy-5-méthylphényl)propionyloxy)-1,1-diméthyléthyl]-2,4,8,10-tétraoxaspiro[5.5]undécane est mélangé en une quantité de 0,001 à 5 parties en poids, sur la base de 100 parties en poids de la résine polyoléfinique.

3. Utilisation suivant la revendication 2, dans laquelle du 3,9-bis[2-(3-(3-tertio-butyl-4-hydroxy-5-méthylphényl)propionyloxy)-1,1-diméthyléthyl]-2,4,8,10-tétraoxaspiro[5.5]undécane est mélangé en une quantité d'au moins 0,01 partie en poids sur la base de 100 parties en poids de la résine polyoléfinique.

4. Utilisation suivant la revendication 2 ou 3, dans laquelle du 3,9-bis[2-(3-(3-tertio-butyl-4-hydroxy-5-méthylphényl)propionyloxy)-1,1-diméthyléthyl]-2,4,8,10-tétraoxaspiro[5.5]undécane est mélangé en une quantité d'au plus 1 partie en poids, sur la base de 100 parties en poids de la résine polyoléfinique.

5. Utilisation suivant l'une quelconque des revendications précédentes, dans laquelle la résine polyoléfinique consiste en polypropylène.
